(19) Europäisches Patentamt
European Patent Office
Office européen des brevets

(11) EP 3 644 268 A1

(12) EUROPEAN PATENT APPLICATION
published in accordance with Art. 153(4) EPC

(43) Date of publication:
29.04.2020 Bulletin 2020/18

(51) Int Cl.:
$G06Q\ 50/18$ (2012.01)

(21) Application number: 18821119.7

(22) Date of filing: 21.06.2018

(86) International application number:
PCT/CN2018/092111

(87) International publication number:
WO 2018/233652 (27.12.2018 Gazette 2018/52)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 21.06.2017 CN 201710476483

(71) Applicants:
• Huawei Technologies Co., Ltd.
Longgang District
Shenzhen, Guangdong 518129 (CN)
• The Chancellor, Masters and Scholars of
The University of Oxford
Oxford (GB)

(72) Inventors:
• AI, Chao
Shenzhen
Guangdong 518129 (CN)
• FU, Xiaolan
Oxford (GB)
• LI, Shaomeng
Oxford (GB)
• XU, Xiaogang
Shenzhen
Guangdong 518129 (CN)

(74) Representative: Körber, Martin Hans
Mitscherlich PartmbB
Patent- und Rechtsanwälte
Sonnenstrasse 33
80331 München (DE)

(54) METHOD AND SYSTEM FOR EVALUATING MONETARY VALUE OF PATENT, AND APPLICATION PROGRAM

(57) An embodiment of the present invention provides a patent monetary value evaluation method. The method includes: obtaining a patent factor of a subject patent; obtaining commercial data of a company holding the patent; obtaining technical market information of a technology related to the patent in an application country, where the technical market information includes at least technical breadth information of the patent; and estimating monetary value of the patent by using a preset calculation model based on the patent factor, the commercial data, and the technical market information, where the calculation model comprises a calculation function and variable coefficients corresponding to the patent factor, the commercial data, and the technical market information, and input variables of the calculation function include a product of the patent factor and the corresponding variable coefficient, a product of the commercial data and the corresponding variable coefficient, and a product of the technical market information and the corresponding variable coefficient.

EP 3 644 268 A1

Obtain a patent factor of a subject patent — S110

Obtain commercial data of a company holding the subject patent — S120

Obtain technical market information of a technology related to the subject patent in an application country — S130

Estimate monetary value of the patent by using a preset calculation model based on the patent factor, the commercial data, and the technical market information — S140

Obtain macroeconomic information of the application country of the patent — S131

FIG. 1

## Description

This application claims priority to Chinese Patent Application No. 201710476483.6, filed with the Chinese Patent Office on June 21, 2017 and entitled "PATENT MONETARY VALUE EVALUATION METHOD AND SYSTEM, AND APPLICATION PROGRAM", which is incorporated herein by reference in its entirety.

## TECHNICAL FIELD

The present invention relates to the computer field, and in particular, to a patent monetary value evaluation method and system, and an application program.

## BACKGROUND

Technical innovation is a major force for long-term economic growth. In view of a nature that technologies are used as intangible assets, a lack of an effective evaluation method has been a major bottleneck to impede technology development, transfer, and commercialization. Attempts have been made to use different classical financial models to evaluate value of new innovation patents, from simple financial calculation manners based on time value of money to excessively complex models that combine quantitative analysis with qualitative analysis. However, results of these attempts are undesirable, because these models focus on only one or a few aspects of technology valuation, and considered elements are not comprehensive. In addition, some models are developed for only a specific industrial/technical field and are difficult to be widely used. As an important intangible asset for a technical innovative startup to protect core competitiveness of the company, patents become one of important bases for evaluating value of this innovative company. For a startup, sometimes value of a core patent can almost represent overall value of the company.

Therefore, an effective technical evaluation method not only needs to consider basic information of a patent, but also should have a meaningful understanding on impacts of factors such as a relationship between market supply and demand, technical novelty, a complementarity technology, and an environment. An indicator in these indicators that has active impact or negative impact on technical value evaluation, and a quantization degree of the impact are completely undisclosed in the existing method.

Recently, as financial data and patent information of listed companies become more available, many researchers have begun to try to overcome weaknesses in conventional valuation models and try to understand in-depth value determinants. To exceed theoretical modeling focused on a patent system, some studies attempt to link research routes to patent evaluation practices. However, these attempts mainly rely on simple patent counts (for example, a quantity of reference documents) to measure innovation output, and therefore it is still difficult to find how a patent value indicator affects potential commercial value of a technology.

## SUMMARY

To evaluate monetary value of a patent more accurately, embodiments of the present invention provide a patent monetary value evaluation method and system, and an application program. The technical solutions are as follows:

According to an aspect, an embodiment of the present invention provides a patent monetary value evaluation method, where the method includes:

obtaining a patent factor of a subject patent, where the patent factor includes at least forward reference information of the patent, backward reference information of the patent, a legal status of the patent, and application and authorization information of patent family members;
obtaining commercial data of a company holding the patent, where the commercial data includes at least total asset information of the company and debt ratio information of the company;
obtaining technical market information of a technology related to the patent in an application country, where the technical market information includes at least technical breadth information of the patent, and the technical breadth information reflects at least alternative-technology information of the technology related to the subject patent; and
estimating monetary value of the patent by using a preset calculation model based on the patent factor, the commercial data, and the technical market information, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, and the technical market information, and input variables of the calculation function include a product of the patent factor and the corresponding variable coefficient, a product of the commercial data and the corresponding variable coefficient, and a product of the technical market information and the corresponding variable coefficient.

Optionally, the preset calculation model may be obtained by using a fixed-effects algorithm (Fixed-effects panel estimator, FE, a calculation method in the statistics field) to train the patent factors of the preset quantity of preselected patents and the commercial data of the company holding the preset quantity of preselected patents.

Optionally, the preset calculation model may be alternatively obtained by using a hausman (Hausman) algorithm to train the patent factors of the preset quantity of preselected patents and the commercial data of the company holding the preset quantity of preselected patents.

Optionally, the patent factor further includes:

a logarithm of a difference between an application time and an authorization time of the subject patent, a quantity of claims of the patent, a quantity of patent family members of the patent, backward reference information of the patent family members of the patent, and a logarithm of a total quantity of patents of the company holding the patent.

Optionally, the application and authorization information of the patent family members includes:

a quantity of patents whose applications are submitted to the United States Patent and Trademark Office in the patent family members, a quantity of patents whose applications are submitted to the European Patent Office in the patent family members, and a quantity of patents whose applications are submitted to a world intellectual property organization in the patent family members.

Optionally, a technical breadth of the patent is measured by using a quantity of IPC classification numbers of the patent or a quantity of USPC classification numbers of the patent.

Optionally, a technical breadth of the patent may be alternatively measured by using a quantity of Europe patent classification (ECLA) numbers of the patent or a quantity of cooperative patent classification system (CPC) numbers of the patent.

Optionally, the forward reference information of the patent includes a quantity of patent documents that reference the subject patent and a quantity of non-patent documents that reference the subject patent; the backward reference information of the patent includes a quantity of reference documents referenced by the subject patent; and the backward reference information of the patent family members of the patent includes a quantity of reference documents referenced by the patent family members of the subject patent.

Optionally, the technical market information further includes technical expansibility of the application country of the patent and maturity for deploying the patent technology in the application country.

Optionally, the method further includes:

obtaining macroeconomic information of the application country of the patent, where the macroeconomic information includes at least a macroeconomic status and technical popularity information of the application country; and
the estimating monetary value of the patent by using a preset calculation model based on the patent factor, the commercial data, and the technical market information includes:
estimating the monetary value of the patent by using a preset calculation model based on the patent factor, the commercial data, the technical market information, and the macroeconomic information of the application country, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, the technical market information, and the macroeconomic information, and input variables of the calculation function include a product of the patent factor and the corresponding variable coefficient, a product of the commercial data and the corresponding variable coefficient, a product of the technical market information and the corresponding variable coefficient, and a product of the macroeconomic information and the corresponding variable coefficient.

Optionally, the macroeconomic information is measured in a form of a basic technology change degree of the application country.

Optionally, the estimating the monetary value of the patent by using a preset calculation model based on the patent factor, the commercial data, the technical market information, and the macroeconomic information includes:
estimating the monetary value of the patent by using the following calculation model:

$$TV = e \wedge \{\ln(a \times Size_{i,t}) + b \times FCit_{i,t} + c \times FNCit_{i,t} + d \times Claim_{i,t} + f \times BCit_{i,t}$$
$$+ g \times USApp_{i,t} + h \times WApp_{i,t} + j \times EUApp_{i,t} + \ln(k \times Glags_{i,t}) + l \times SD_{i,t} + m \times FS_{i,t} + n$$
$$\times BFCit_{i,t} + o \times LnPat_{i,t} + p \times NRI_t + q \times IC_t + t \times SR_{i,t}\},$$

where TV is a monetary valuation of the patent; $FCit_{i,t}$ is the quantity of patent documents that reference the subject patent in the forward reference information of the patent; $FNCit_{i,t}$ is the quantity of non-patent documents that reference the subject patent in the forward reference information of the patent; $Claim_{i,t}$ is the quantity of claims of the subject patent; $BCit_{i,t}$ is the quantity of reference documents referenced by the subject patent; $USApp_{i,t}$ is the quantity of patents whose applications are submitted to the United States Patent and Trademark Office in the patent family members; $WApp_{i,t}$ is the quantity of patents whose applications are submitted to a world intellectual property organization in the patent family members; $EUApp_{i,t}$ is the quantity of patents whose applications are submitted to the European Patent Office in the patent family members; $Ln(k \times Glags_{i,t})$ is a logarithm that is of the difference between the application time and the authorization time of the subject patent and that has a variable coefficient k; $SD_{i,t}$ is the technical breadth of the subject patent; $FS_{i,t}$ is the quantity of patent family members of the subject patent; $BFCit_{i,t}$ is the quantity of reference documents referenced by the patent family members of the patent; $LnPat_{i,t}$ is the logarithm of the total quantity of patents of the company holding the subject patent; $NRI_t$ is the technical expansibility of the application country of the patent and the maturity for deploying the patent technology in the application country; $IC_t$ is an infrastructure change degree of the application country of the subject patent; $Ln(a \times Size_{i,t})$ is a logarithm that is of total assets of the company holding the subject patent and that has a variable coefficient a; and $SR_{i,t}$ is a debt ratio of the company holding the subject patent; and a, b, c, d, f, g, h, j, k, 1, m, n, o, p, q, r, and t are variable coefficients that respectively correspond to specific factors in the patent factor, the commercial data, the technical market information, and the macroeconomic information, the variable coefficients are real numbers, and the variable coefficients are real numbers in a range of [-1, +1].

According to an aspect, an embodiment of the present invention provides a patent monetary value evaluation method, where the method includes:

obtaining a patent factor, commercial data of a company holding a patent, and technical market information of a technology related to the patent in an application country, where the patent factor, the commercial data, and the technical market information are used for evaluating monetary value of the subject patent; the patent factor includes at least forward reference information of the patent, backward reference information of the patent, a legal status of the patent, and application and authorization information of patent family members; the commercial data includes at least total asset information of the company and debt ratio information of the company; and the technical market information includes at least alternative-technology information of the technology related to the patent;

selecting any one of the patent factor, the commercial data, and the technical market information that are obtained as a first evaluation element;

performing a first value evaluation on the subject patent based on the first evaluation element and a corresponding variable coefficient;

on a basis of the first value evaluation, performing a second value evaluation on the subject patent based on a second evaluation element and a corresponding variable coefficient, where the second evaluation element is any one of the patent factor, the commercial data, and the technical market information except the first evaluation element;

on a basis of the second value evaluation, performing a third value evaluation on the subject patent based on a third evaluation element and a corresponding variable coefficient, where the third evaluation element is a remaining one of the patent factor, the commercial data, and the technical market information except the first evaluation element and the second evaluation element; and

on a basis of the third value evaluation, performing, on the subject patent based on a review comment on the subject patent of a reviewing process, a fourth value evaluation that is based on patent office recognition, to obtain the monetary value of the patent that is based on a result of the fourth value evaluation.

Optionally, the variable coefficients are obtained by performing, based on a preset algorithm, data training on patent factors of a preset quantity of preselected patents and commercial data of a company holding the preset quantity of preselected patents; and the variable coefficients are real numbers in a range of [-1, +1].

According to an aspect, an embodiment of the present invention provides a patent monetary value evaluation system, where the system includes: a processor, a memory, and a display, the memory is configured to store one or more instructions, and the instruction is configured to be executed by the processor; when the instruction is executed, the processor performs the following steps:

obtaining a patent factor of a subject patent, where the patent factor includes at least forward reference information of the patent, backward reference information of the patent, a legal status of the patent, and application and authorization information of patent family members;

obtaining commercial data of a company holding the patent, where the commercial data includes at least total asset information of the company and debt ratio information of the company;

obtaining technical market information of a technology related to the patent in an application country, where the technical market information includes at least technical breadth information of the patent, and the technical breadth information reflects at least alternative-technology information of the technology related to the subject patent; and

estimating monetary value of the patent by using a preset calculation model based on the patent factor, the commercial data, and the technical market information, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, and the technical market information, and input variables of the calculation function include a product of the patent factor and the corresponding variable coefficient, a product of the commercial data and the corresponding variable coefficient, and a product of the technical market information and the corresponding variable coefficient.

The display is configured to display the monetary value of the subject patent that is obtained by the processor by executing the instruction.

Optionally, when the instruction is executed, the processor further performs the following step:

obtaining macroeconomic information of the application country of the patent, where the macroeconomic information includes at least a macroeconomic status and technical popularity information of the application country; and
the estimating monetary value of the patent by using a preset calculation model based on the patent factor, the commercial data, and the technical market information includes:
estimating the monetary value of the patent by using a preset calculation model based on the patent factor, the commercial data, the technical market information, and the macroeconomic information of the application country, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, the technical market information, and the macroeconomic information, and input variables of the calculation function include a product of the patent factor and the corresponding variable coefficient, a product of the commercial data and the corresponding variable coefficient, a product of the technical market information and the corresponding variable coefficient, and a product of the macroeconomic information and the corresponding variable coefficient.

Optionally, when the instruction is executed, the processor further performs the following step: estimating the monetary value of the patent by using the following calculation model:

$$TV = e \wedge \{\ln(a \times Size_{i,t}) + b \times FCit_{i,t} + c \times FNCit_{i,t} + d \times Claim_{i,t} + f \times BCit_{i,t}$$

$$+ g \times USApp_{i,t} + h \times WApp_{i,t} + j \times EUApp_{i,t} + \ln(k \times Glags_{i,t}) + l \times SD_{i,t} + m \times FS_{i,t} + n$$

$$\times BFCit_{i,t} + o \times LnPat_{i,t} + p \times NRI_t + q \times IC_t + t \times SR_{i,t}\},$$

where TV is a monetary valuation of the patent; $FCit_{i,t}$ is a quantity of patent documents that reference the subject patent in the forward reference information of the patent; $FNCit_{i,t}$ is the quantity of patent documents that reference the subject patent in the forward reference information of the patent; $Claim_{i,t}$ is a quantity of claims of the subject patent; $BCit_{i,t}$ is a quantity of reference documents referenced by the subject patent; $USApp_{i,t}$ is a quantity of patents whose applications are submitted to the United States Patent and Trademark Office in the patent family members; $WApp_{i,t}$ is a quantity of patents whose applications are submitted to a world intellectual property organization in the patent family members; $EUApp_{i,t}$ is a quantity of patents whose applications are submitted to the European Patent Office in the patent family members; $\ln(k \times Glags_{i,t})$ is a logarithm that is of a difference between an application time and an authorization time of the subject patent and that has a variable coefficient k; $SD_{i,t}$ is a technical breadth of the subject patent; $FS_{i,t}$ is a quantity of patent family members of the subject patent; $BFCit_{i,t}$ is a quantity of reference documents referenced by the patent family members of the patent; $LnPat_{i,t}$ is a logarithm of a total quantity of patents of the company holding the subject patent; $NRI_t$ is technical expansibility of the application country of the patent and maturity for deploying the patent technology in the application country; $IC_t$ is an infrastructure change degree of the application country of the subject patent; $\ln(a \times Size_{i,t})$ is a logarithm that is of total assets of the company holding the subject patent and that has a variable coefficient a; and $SR_{i,t}$ is a debt ratio of the company holding the subject patent; and
a, b, c, d, f, g, h, j, k, 1, m, n, o, p, q, r, and t are variable coefficients that respectively correspond to specific factors in the patent factor, the commercial data, the technical market information, and the macroeconomic information, the variable coefficients are real numbers, and the variable coefficients are real numbers in a range of [-1, +1].

According to an aspect, an embodiment of the present invention provides an application program, where the program is installed on an intelligent terminal or a computer system, and when the application program is executed, a processor of the intelligent terminal or the computer system is enabled to perform the following steps:

obtaining a patent factor of a subject patent, where the patent factor includes at least forward reference information of the patent, backward reference information of the patent, a legal status of the patent, and application and authorization information of patent family members;

obtaining commercial data of a company holding the patent, where the commercial data includes at least total asset information of the company and debt ratio information of the company;

obtaining technical market information of a technology related to the patent in an application country, where the technical market information includes at least technical breadth information of the patent, and the technical breadth information reflects at least alternative-technology information of the technology related to the subject patent; and

estimating monetary value of the patent by using a preset calculation model based on the patent factor, the commercial data, and the technical market information, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, and the technical market information, and input variables of the calculation function include a product of the patent factor and the corresponding variable coefficient, a product of the commercial data and the corresponding variable coefficient, and a product of the technical market information and the corresponding variable coefficient.

Optionally, when the application program is executed, the processor of the intelligent terminal or the computer system is further enabled to perform the following step:

obtaining macroeconomic information of the application country of the patent, where the macroeconomic information includes at least a macroeconomic status and technical popularity information of the application country; and

the estimating monetary value of the patent by using a preset calculation model based on the patent factor, the commercial data, and the technical market information includes:

estimating the monetary value of the patent by using a preset calculation model based on the patent factor, the commercial data, the technical market information, and the macroeconomic information of the application country, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, the technical market information, and the macroeconomic information, and input variables of the calculation function include a product of the patent factor and the corresponding variable coefficient, a product of the commercial data and the corresponding variable coefficient, a product of the technical market information and the corresponding variable coefficient, and a product of the macroeconomic information and the corresponding variable coefficient.

Optionally, when the application program is executed, the processor of the intelligent terminal or the computer system is further enabled to perform the following step:

estimating the monetary value of the patent by using the following calculation model:

$$TV = e \char94 \{\ln(a \times Size_{i,\,t}) + b \times FCit_{i,t} + c \times FNCit_{i,t} + d \times Claim_{i,t} + f \times BCit_{i,t}$$

$$+ g \times USApp_{i,t} + h \times WApp_{i,t} + j \times EUApp_{i,t} + \ln(k \times Glags_{i,\,t}) + l \times SD_{i,t} + m \times FS_{i,t} + n$$

$$\times BFCit_{i,t} + o \times LnPat_{i,t} + p \times NRI_t + q \times IC_t + t \times SR_{i,t}\},$$

where TV is a monetary valuation of the patent; $FCit_{i,t}$ is a quantity of patent documents that reference the subject patent in the forward reference information of the patent; $FNCit_{i,t}$ is the quantity of patent documents that reference the subject patent in the forward reference information of the patent; $Claim_{i,t}$ is a quantity of claims of the subject patent; $BCit_{i,t}$ is a quantity of reference documents referenced by the subject patent; $USApp_{i,t}$ is a quantity of patents whose applications are submitted to the United States Patent and Trademark Office in the patent family members; $WApp_{i,t}$ is a quantity of patents whose applications are submitted to a world intellectual property organization in the patent family members; $EUApp_{i,t}$ is a quantity of patents whose applications are submitted to the European Patent Office in the patent family members; $\ln(k \times Glags_{i,\,t})$ is a logarithm that is of a difference between an application time and an authorization time of the subject patent and that has a variable coefficient k; $SD_{i,t}$ is a technical breadth of the subject patent; $FS_{i,t}$ is a quantity of patent family members of the subject patent; $BFCit_{i,t}$ is a quantity of reference documents referenced by the patent family members of the patent; $LnPat_{i,t}$ is a logarithm of a total quantity of patents of the company holding the subject patent; $NRIt$ is technical expansibility of the application country of the patent and maturity for deploying the patent technology in the application country; $IC_t$ is an infrastructure change degree of the application country of the subject patent; Ln(a x $Size_{i,t}$) is a logarithm that is of total assets of the company holding the subject patent and that has a variable coefficient a; and $SR_{i,t}$ is a debt ratio of the company holding the subject patent; and
a, b, c, d, f, g, h, j, k, 1, m, n, o, p, q, r, and t are variable coefficients that respectively correspond to specific factors in the patent factor, the commercial data, the technical market information, and the macroeconomic information, the variable coefficients are real numbers, and the variable coefficients are real numbers in a range of [-1, +1].

According to an aspect, an embodiment of the present invention provides a patent monetary value evaluation system, where the system includes: a processor, a memory, and a display, the memory is configured to store one or more instructions, and the instruction is configured to be executed by the processor; when the instruction is executed, the processor performs the following steps:

obtaining a patent factor, commercial data of a company holding a patent, and technical market information of a technology related to the patent in an application country, where the patent factor, the commercial data, and the technical market information are used for evaluating monetary value of the subject patent; the patent factor includes at least forward reference information of the patent, backward reference information of the patent, a legal status of the patent, and application and authorization information of patent family members; the commercial data includes at least total asset information of the company and debt ratio information of the company; and the technical market information includes at least alternative-technology information of the technology related to the patent;
selecting any one of the patent factor, the commercial data, and the technical market information that are obtained as a first evaluation element;
performing a first value evaluation on the subject patent based on the first evaluation element and a corresponding variable coefficient;
on a basis of the first value evaluation, performing a second value evaluation on the subj ect patent based on a second evaluation element and a corresponding variable coefficient, where the second evaluation element is any one of the patent factor, the commercial data, and the technical market information except the first evaluation element;
on a basis of the second value evaluation, performing a third value evaluation on the subject patent based on a third evaluation element and a corresponding variable coefficient, where the third evaluation element is a remaining one of the patent factor, the commercial data, and the technical market information except the first evaluation element and the second evaluation element; and
on a basis of the third value evaluation, performing, on the subject patent based on a review comment on the subject patent of a reviewing process, a fourth value evaluation that is based on patent office recognition, to obtain the monetary value of the patent that is based on a result of the fourth value evaluation.

According to an aspect, an embodiment of the present invention provides an application program, where the program is installed on an intelligent terminal or a computer system, and when the application program is executed, a processor of the intelligent terminal or the computer system is enabled to perform the foregoing evaluation steps.

Optionally, the foregoing application program is stored in the computer-readable storage medium.

Optionally, the foregoing solution may be used for determining a valuation of a company possessing a subject patent, and basically, monetary value of the company can be reflected when monetary value of the patent possessed by the company is determined.

The embodiments of the present invention describe a patent monetary value evaluation manner, and interdependence between patent value and market factors, enterprise factors, and technical factors is determined based on analysis and understanding of historical data and market dynamics. The model is simple and easy for use and can evaluate a patent and/or a company possessing the patent to obtain monetary value, thereby effectively resolving a pricing basis problem during fund raising and trading of an innovative technology. Therefore, the model is of great significance in promoting patent technology investment, transfer and commercialization.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.

FIG. 1 is a flowchart of a patent monetary value evaluation method according to an embodiment of the present invention;

FIG. 2 is a flowchart of a patent monetary value evaluation method according to an embodiment of the present invention;

FIG. 3 is a flowchart of a patent monetary value evaluation method according to an embodiment of the present invention;

FIG. 4 is a schematic diagram of a patent monetary value evaluation system according to an embodiment of the present invention; and

FIG. 5 is a schematic diagram of a patent monetary value evaluation system according to an embodiment of the present invention.

## DESCRIPTION OF EMBODIMENTS

To make the objectives, technical solutions, and advantages of the present invention clearer, the following further describes the implementations of the present invention in detail with reference to the accompanying drawings.

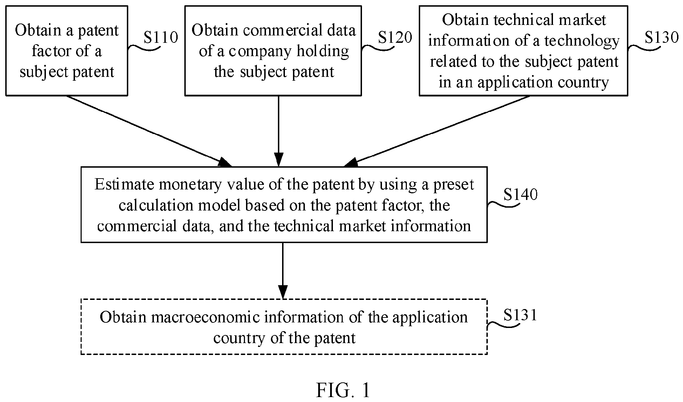

As shown in FIG. 1, an embodiment of the present invention provides a patent monetary value evaluation method, and the method includes the following steps.

S110. Obtain a patent factor of a subject patent, where the patent factor includes at least forward reference information of the patent, backward reference information of the patent, a legal status of the patent, and application and authorization information of patent family members.

Optionally, in one embodiment, the patent factor further includes a logarithm of a difference between an application time and an authorization time of the subject patent, a quantity of claims of the patent, a quantity of patent family members of the patent, backward reference information of the patent family members of the patent, and a logarithm of a total quantity of patents of the company holding the patent.

Optional, in one embodiment, the forward reference information of the patent includes a quantity of patent documents that reference the subject patent and a quantity of non-patent documents that reference the subject patent; the backward reference information of the patent includes a quantity of reference documents referenced by the subject patent; and the backward reference information of the patent family members of the patent includes a quantity of reference documents referenced by the patent family members of the subject patent.

Optionally, in one embodiment, the application and authorization information of the patent family members includes a quantity of patents whose applications are submitted to the United States Patent and Trademark Office in the patent family members, a quantity of patents whose applications are submitted to the European Patent Office in the patent family members, and a quantity of patents whose applications are submitted to a world intellectual property organization (for example, patents whose applications are submitted in a PCT (Patent Cooperation Treaty, patent cooperation treaty) manner, or patents whose applications are submitted in a Paris convention manner) in the patent family members.

S120. Obtain commercial data of a company holding the subject patent, where the commercial data includes at least total asset information of the company and debt ratio information of the company.

S130. Obtain technical market information of a technology related to the subject patent in an application country, where the technical market information includes at least technical breadth information of the patent, and the technical breadth information reflects at least alternative-technology information of the technology related to the subject patent.

Optionally, in one embodiment, the technical market information further includes technical expansibility of the application country of the patent and maturity for deploying the patent technology in the application country. Optionally, the technical market information is used for indicating technical environment effects brought by a technology that is complementary to the technology related to the subject patent. Optionally, the technical market information reflects a capability of the application country of the subject patent in converting a technical achievement of the technology related to the patent to practice.

For example, based on a current economic development status, deploying 4G technologies in Africa is sufficient. For a 5G patent, technical expansible significance of submitting an application of the patent in Africa is different from that of submitting the application of the patent in China, Europe, and the United States. Technical expansibility of the 5G patent whose application is submitted in China, Europe, and the United States is higher than that of the 5G patent whose application is submitted in Africa.

Optionally, in one embodiment, a technical breadth of the patent is measured by using a quantity of IPC classification numbers of the subject patent or a quantity of USPC classification numbers of the subject patent.

Optionally, in one embodiment, a technical breadth of the patent may be alternatively measured by using a quantity of Europe patent classification (ECLA) numbers of the subject patent or a quantity of cooperative patent classification system (CPC) numbers of the subject patent.

For example, if the technical breadth of the patent is measured by using the quantity of IPC classification numbers, and assuming that there are five IPC classification numbers of the subject patent, a metric factor of the technical breadth is five. Assuming that there are eight IPC classification numbers of the subject patent, a metric factor of the technical breadth is eight. This is similar to another classification number, and details are not described again.

S140. Estimate monetary value of the patent by using a preset calculation model based on the patent factor, the commercial data, and the technical market information, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, and the technical market information, and input variables of the calculation function includes a product of the patent factor and the corresponding variable coefficient, a product of the commercial data and the corresponding variable coefficient, and a product of the technical market information and the corresponding variable coefficient.

Optionally, in one embodiment, the preset calculation model may be obtained by using a fixed-effects algorithm (Fixed-effects panel estimator, FE, a calculation method in the statistics field) to train the patent factors of the preset quantity of preselected patents and the commercial data of the company holding the preset quantity of preselected patents.

Effects of features that do not change over time are removed from the fixed-effects algorithm to obtain a pure effect of features that change over time. In the fixed-effects algorithm, an important assumption is that the feature that does not change over time is unique to a to-be-evaluated individual and does not associate with another feature of the to-be-evaluated individual. In the fixed-effects algorithm, individuals are different, and therefore, an error term and a constant of each individual (the constant represents an individual feature of the individual) is irrelevant to other individuals.

Optionally, in one embodiment, the preset calculation model may be alternatively obtained by using a hausman (Hausman) algorithm to train the patent factors of the preset quantity of preselected patents and the commercial data of the company holding the preset quantity of preselected patents.

As shown by a dashed block in FIG. 1, optionally, the evaluation method may further include the following step: S131. Obtain macroeconomic information of the application country of the patent, where the macroeconomic information includes at least a macroeconomic status and technical popularity information of the application country; and in one embodiment, the macroeconomic information is measured in a form of a basic technology change degree of the application country. For example, the basic technology change degree herein is mainly a possibility of a sudden revolution in technologies, for example, previously, emergence of Apple's mobile phone leads the development of smartphones. For another example, the development of intelligent wearable devices in recent years diversifies smart terminals.

S140 includes:

estimating the monetary value of the patent by using a preset calculation model based on the patent factor, the commercial data, the technical market information, and the macroeconomic information of the application country, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, the technical market information, and the macroeconomic information, and input variables of the calculation function include a product of the patent factor and the corresponding variable coefficient, a product of the commercial data and the corresponding variable coefficient, a product of the technical market information and the corresponding variable coefficient, and a product of the macroeconomic information and the corresponding variable coefficient.

Optionally, in one embodiment, the monetary value of the patent may be estimated by using the following calculation model:

$$TV = e \wedge \{\ln(a \times Size_{i,t}) + b \times FCit_{i,t} + c \times FNCit_{i,t} + d \times Claim_{i,t} + f \times BCit_{i,t}$$

$$+ g \times USApp_{i,t} + h \times WApp_{i,t} + j \times EUApp_{i,t} + \ln(k \times Glags_{i,t}) + l \times SD_{i,t} + m \times FS_{i,t} + n$$

$$\times BFCit_{i,t} + o \times LnPat_{i,t} + p \times NRI_t + q \times IC_t + t \times SR_{i,t}\},$$

where TV is a monetary valuation of the patent; $FCit_{i,t}$ is the quantity of patent documents that reference the subject patent in the forward reference information of the patent; $FNCit_{i,t}$ is the quantity of non-patent documents that reference the subject patent in the forward reference information of the patent; $Claim_{i,t}$ is the quantity of claims of the subject patent; $BCit_{i,t}$ is the quantity of reference documents referenced by the subject patent; $USApp_{i,t}$ is the quantity of patents whose applications are submitted to the United States Patent and Trademark Office in the patent family members; $WApp_{i,t}$ is the quantity of patents whose applications are submitted to a world intellectual property organization in the patent family members; $EUApp_{i,t}$ is the quantity of patents whose applications are submitted to the European Patent Office in the patent family members; $\ln(k \times Glags_{i,t})$ is a logarithm that is of the difference between the application time and the authorization time of the subject patent and that has a variable coefficient k; $SD_{i,t}$ is the technical breadth of the subject patent; $FS_{i,t}$ is the quantity of patent family members of the subject patent; $BFCit_{i,t}$ is the quantity of reference documents referenced by the patent family members of the patent; $LnPat_{i,t}$ is the logarithm of the total quantity of patents of the company holding the subject patent; $NRI_t$ is the technical expansibility of the application country of the patent and the maturity for deploying the patent technology in the application country; $IC_t$ is an infrastructure change degree of the application country of the subject patent; Ln(a x $Size_{i,t}$) is a logarithm that is of total asset of the company holding the subject patent and that has a variable coefficient a; and $SR_{i,t}$ is a debt ratio of the company holding the subject patent; and a, b, c, d, f, g, h, j, k, 1, m, n, o, p, q, r, and t are variable coefficients that respectively correspond to specific factors in the patent factor, the commercial data, the technical market information, and the macroeconomic information, and the variable coefficients are real numbers. In one embodiment, the variable coefficients are real numbers in a range of [-1, +1].

For example, the obtained various evaluation factors (for example, the patent factor and the commercial data) may be directly input into the calculation model, so that the corresponding monetary value is obtained. The input may be manual input by a user, or may be automatic input after the computer automatically obtains the evaluation factors.

It should be noted that, specific descriptions and examples of the various evaluation factors (for example, the patent factor and the commercial data mentioned above) in this embodiment are also applicable to other embodiments of this patent.

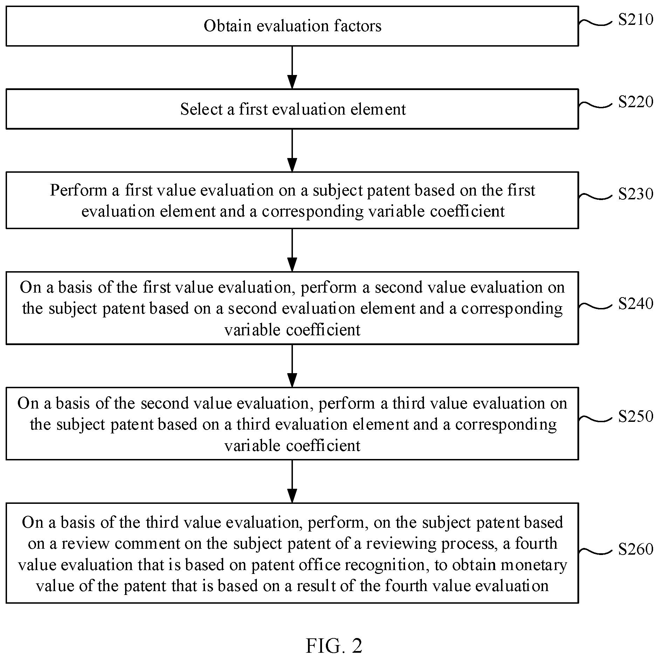

In one embodiment, as shown in FIG. 2, this embodiment of the present invention provides a patent monetary value evaluation method, and the method includes the following steps:

S210. Obtain a patent factor, commercial data of a company holding a patent, and technical market information of a technology related to the patent in an application country, where the patent factor, the commercial data, and the technical market information are used for evaluating monetary value of the subject patent; the patent factor includes at least forward reference information of the patent, backward reference information of the patent, a legal status of the patent, and application and authorization information of patent family members; the commercial data includes at least total asset information of the company and debt ratio information of the company; and the technical market information includes at least alternative-technology information of the technology related to the patent.

S220. Select any one of the patent factor, the commercial data, and the technical market information that are obtained as a first evaluation element.

S230. Perform a first value evaluation on the subject patent based on the first evaluation element and a corresponding variable coefficient.

S240. On a basis of the first value evaluation, perform a second value evaluation on the subject patent based on a second evaluation element and a corresponding variable coefficient, where the second evaluation element is any one of the patent factor, the commercial data, and the technical market information except the first evaluation element.

S250. On a basis of the second value evaluation, perform a third value evaluation on the subject patent based on a third evaluation element and a corresponding variable coefficient, where the third evaluation element is a remaining one of the patent factor, the commercial data, and the technical market information except the first evaluation element and the second evaluation element.

S260. On a basis of the third value evaluation, perform, on the subject patent based on a review comment on the subject patent of a reviewing process, a fourth value evaluation that is based on patent office recognition, to obtain the monetary value of the patent that is based on a result of the fourth value evaluation.

The variable coefficients are obtained by performing, based on a preset algorithm, data training on patent factors of a preset quantity of preselected patents and commercial data of a company holding the preset quantity of preselected patents; and the variable coefficients are real numbers in a range of [-1, +1].

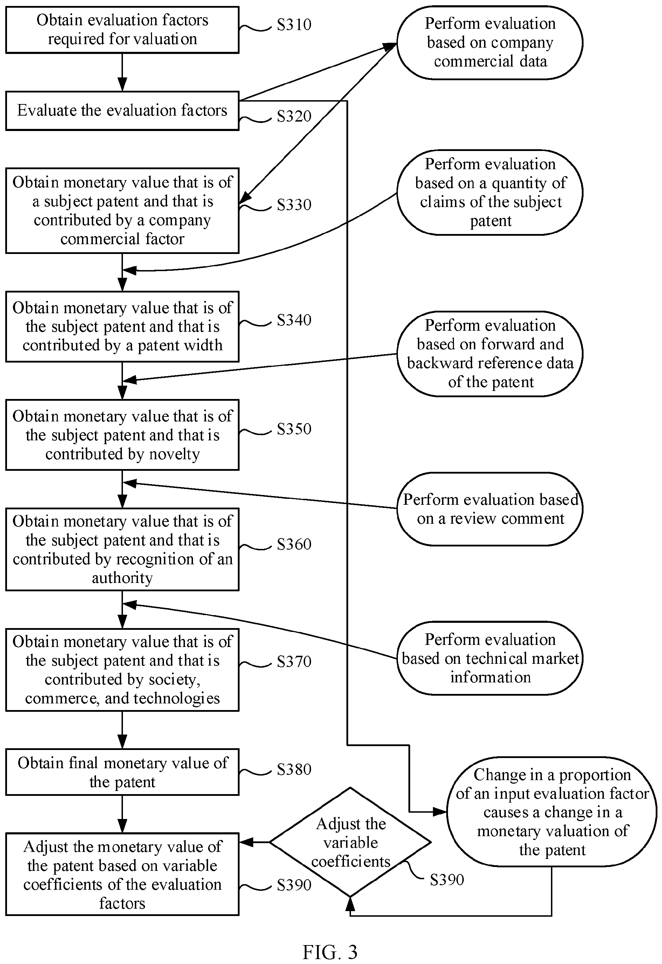

As shown in FIG. 3, an embodiment of the present invention provides a patent monetary value evaluation method, and the method includes the following steps.

S310. Obtain evaluation factors required for evaluating a subject patent.

Optionally, the evaluation factors may include a patent factor, commercial data of a company holding the patent, and technical market information of a technology related to the patent in an application country, where the patent factor includes at least forward reference information of the patent, backward reference information of the patent, a legal status of the patent, and application and authorization information of patent family members; the commercial data includes at least total asset information of the company and debt ratio information of the company; and the technical market information includes at least alternative-technology information of the technology related to the patent.

Optionally, the evaluation factors may further include macroeconomic information of the application country of the patent, where the macroeconomic information includes at least a macroeconomic status and technical popularity information of the application country.

S320. Evaluate monetary value of the patent based on the evaluation factors obtained in S310.

For example, the evaluation process may include the following steps.

S330. Evaluate the subject patent based on the commercial data of the company holding the subject patent, to obtain monetary value that is of the subject patent and that is contributed by the commercial data of the company holding the subject patent.

S340. On a basis of a result of S330, evaluate value of the subject patent based on a quantity of claims of the subject patent, to further obtain monetary value that is of the subject patent and that is contributed by a patent width.

Here, the patent width is measured by using the quantity of claims. A larger quantity of claims indicates a larger patent width.

S350. On a basis of a result of S340, evaluate the value of the subject patent based on forward reference data and backward reference data of the subject patent, to further obtain monetary value that is of the subject patent and that is contributed by novelty.

S360. On a basis of a result of S350, evaluate the value of the subject patent based on a review comment on the subject patent from a patent office, to further obtain monetary value that is of the subject patent and that is contributed by recognition of an authority.

Optionally, the value may be evaluated based on a quantity of rounds of review comments and types of the review comments (for example, value of a patent with more review comments on novelty is relatively lower than value of a patent with fewer comments on novelty; and value of a patent with more types of review comments is relatively lower than value of a patent with a format-type review comment).

Optionally, the evaluation herein may be performed based on a difference between a time at which a patent office receives an application and a time at which the patent office authorizes the application.

S370. On a basis of a result of S360, evaluate the value of the subject patent based on the technical market information related to the subject patent, to further obtain monetary value that is of the subject patent and that is contributed by the technical market information.

S380. Obtain final monetary value of the subject patent after the foregoing evaluation steps.

In one embodiment, in the foregoing steps, each evaluation factor may correspond to a different proportion, and a proportion change causes a value change. Optionally, each evaluation factor may be multiplied by a corresponding variable coefficient to achieve an objective of configuring a proportion of each evaluation factor, for example, this is implemented in the following step in FIG. 3:

S390. In each of the foregoing evaluation steps, for example, S330 to S370, during evaluation, multiply each evaluation factor by a corresponding variable coefficient, so as to achieve an objective of adjusting an evaluation result, to adjust the monetary value of the subject patent.

The variable coefficients are obtained by performing, based on a preset algorithm, data training on patent factors of a preset quantity of preselected patents and commercial data of a company holding the preset quantity of preselected patents; and the variable coefficients are real numbers in a range of [-1, +1].

Optionally, in the evaluation steps, for example, S330 to S370, the value may be evaluated by using the following calculation model:

$$
\begin{aligned}
TV = e ^\wedge \{ &\ln(a \times Size_{i,\,t}) + b \times FCit_{i.t} + c \times FNCit_{i.t} + d \times Claim_{i,t} + f \times BCit_{i.t} \\
&+ g \times USApp_{i,t} + h \times WApp_{i,t} + j \times EUApp_{i,t} + \mathrm{Ln}(k \times Glags_{i,\,t}) + l \times SD_{i,t} + m \times FS_{i,t} + n \\
&\times BFCit_{i,t} + o \times LnPat_{i,t} + p \times NRI_t + q \times IC_t + t \times SR_{i,t} \},
\end{aligned}
$$

where TV is a monetary valuation of the patent; $FCit_{i,t}$ is a quantity of patent documents that reference the subject patent in the forward reference information of the patent; $FNCit_{i,t}$ is a quantity of non-parent documents that reference the subject patent in the forward reference information of the patent; $Claim_{i,t}$ is a quantity of claims of the subject patent; $BCit_{i,t}$ is a quantity of reference documents referenced by the subject patent; $USApp_{i,t}$ is a quantity of patents whose applications are submitted to the United States Patent and Trademark Office in the patent family members; $WApp_{i,t}$ is a quantity of patents whose applications are submitted to a world intellectual property organization in the patent family members; $EUApp_{i,t}$ is a quantity of patents whose applications are submitted to the European Patent Office in the patent family members; $\mathrm{Ln}(k \times Glags_{i,\,t})$ is a logarithm that is of a difference between an application time and an authorization time of the subject patent and that has a variable coefficient k; $SD_{i,t}$ is a technical breadth of the subject patent; $FS_{i,t}$ is a quantity of patent family members of the subject patent; $BFCit_{i,t}$ is a quantity of reference documents referenced by the patent family members of the patent; $LnPat_{i,t}$ is a logarithm of a total quantity of patents of the company holding the subject patent; $NRI_t$ is technical expansibility of the application country of the patent and maturity for deploying the patent technology in the application country; $IC_t$ is an infrastructure change degree of the application country of the subject patent; $\mathrm{Ln}(a \times Size_{i,\,t})$ is a logarithm that is of total assets of the company holding the subject patent and that has a variable coefficient a; and $SR_{i,t}$ is a debt ratio of the company holding the subject patent; and

a, b, c, d, f, g, h, j, k, 1, m, n, o, p, q, r, and t are variable coefficients that respectively correspond to specific factors in the patent factor, the commercial data, the technical market information, and the macroeconomic information, and the variable coefficients are real numbers.

The embodiments of the present invention describe a patent monetary value evaluation manner, and interdependence between patent value and market factors, enterprise factors, and technical factors is determined based on analysis and understanding of historical data and market dynamics. The model is simple and easy for use and can evaluate a patent and/or a company possessing the patent to obtain monetary value, thereby effectively resolving a pricing basis problem during fund raising and trading of an innovative technology. Therefore, the model is of great significance in promoting patent technology investment, transfer and commercialization.

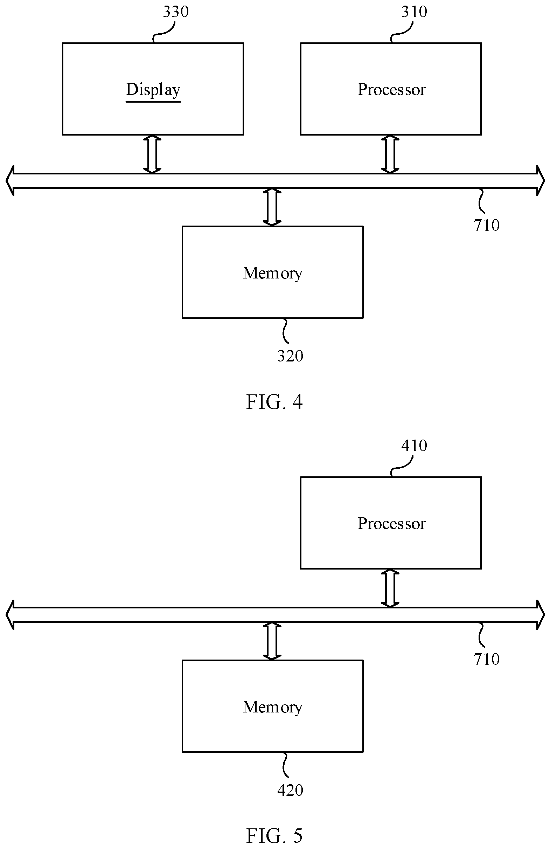

As shown in FIG. 4, an embodiment of the present invention provides a patent monetary value evaluation system. The system includes: a processor 310, a memory 320, and a display 330. Optionally, the processor 310, the memory 320, and the display 330 are connected through a bus 710. The memory is configured to store one or more instructions, and the instruction is configured to be executed by the processor. When the instruction is executed, the processor performs the following steps:

obtaining a patent factor of a subject patent, where the patent factor includes at least forward reference information of the patent, backward reference information of the patent, a legal status of the patent, and application and authorization information of patent family members;

obtaining commercial data of a company holding the patent, where the commercial data includes at least total asset information of the company and debt ratio information of the company;

obtaining technical market information of a technology related to the patent in an application country, where the technical market information includes at least technical breadth information of the patent, and the technical breadth information reflects at least alternative-technology information of the technology related to the subject patent; and

estimating monetary value of the patent by using a preset calculation model based on the patent factor, the commercial data, and the technical market information, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, and the technical market information, and input variables of the calculation function include a product of the patent factor and the corresponding variable coefficient, a product of the commercial data and the corresponding variable coefficient, and a product of the technical market information and the corresponding variable coefficient.

The display is configured to display the monetary value of the subject patent that is obtained by the processor by executing the instruction.

In one embodiment, when the instruction is executed, the processor 310 further performs the following step:

obtaining macroeconomic information of the application country of the patent, where the macroeconomic information includes at least a macroeconomic status and technical popularity information of the application country; and

the estimating monetary value of the patent by using a preset calculation model based on the patent factor, the commercial data, and the technical market information includes:

estimating the monetary value of the patent by using a preset calculation model based on the patent factor, the commercial data, the technical market information, and the macroeconomic information of the application country, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, the technical market information, and the macroeconomic information, and input variables of the calculation function include a product of the patent factor and the corresponding variable coefficient, a product of the commercial data and the corresponding variable coefficient, a product of the technical market information and the corresponding variable coefficient, and a product of the macroeconomic information and the corresponding variable coefficient.

In one embodiment, when the instruction is executed, the processor estimates the monetary value of the patent by using the following calculation model:

$$TV = e \char`^ \{\ln(a \times Size_{i,t}) + b \times FCit_{i,t} + c \times FNCit_{i,t} + d \times Claim_{i,t} + f \times BCit_{i,t}$$

$$+ g \times USApp_{i,t} + h \times WApp_{i,t} + j \times EUApp_{i,t} + \ln(k \times Glags_{i,t}) + l \times SD_{i,t} + m \times FS_{i,t} + n$$

$$\times BFCit_{i,t} + o \times LnPat_{i,t} + p \times NRI_t + q \times IC_t + t \times SR_{i,t}\},$$

where TV is a monetary valuation of the patent; $FCit_{i,t}$ is a quantity of patent documents that reference the subject patent in the forward reference information of the patent; $FNCit_{i,t}$ is the quantity of patent documents that reference the subject patent in the forward reference information of the patent; $Claim_{i,t}$ is a quantity of claims of the subject patent; $BCit_{i,t}$ is a quantity of reference documents referenced by the subject patent; $USApp_{i,t}$ is a quantity of patents whose applications are submitted to the United States Patent and Trademark Office in the patent family members; $WApp_{i,t}$ is a quantity of patents whose applications are submitted to a world intellectual property organization in the patent family members; $EUApp_{i,t}$ is a quantity of patents whose applications are submitted to the European Patent Office in the patent family members; $Ln(k \times Glags_{i,t})$ is a logarithm that is of a difference between an application time and an authorization time of the subject patent and that has a variable coefficient k; $SD_{i,t}$ is a technical breadth of the subject patent; $FS_{i,t}$ is a quantity of patent family members of the subject patent; $BFCit_{i,t}$ is a quantity of reference documents referenced by the patent family members of the patent; $LnPat_{i,t}$ is a logarithm of a total quantity of patents of the company holding the subject patent; $NRI_t$ is technical expansibility of the application country of the patent and maturity for deploying the patent technology in the application country; $IC_t$ is an infrastructure change degree of the application country of the subject patent; $Ln(a \times Size_{i,t})$ is a logarithm that is of total assets of the company holding the subject patent and that has a variable coefficient a; and $SR_{i,t}$ is a debt ratio of the company holding the subject patent; and

a, b, c, d, f, g, h, j, k, 1, m, n, o, p, q, r, and t are variable coefficients that respectively correspond to specific factors in the patent factor, the commercial data, the technical market information, and the macroeconomic information, the variable coefficients are real numbers, and the variable coefficients are real numbers in a range of [-1, +1].

Optionally, a product form of the evaluation system may be an intelligent terminal, for example, a smartphone or a tablet computer.

Optionally, a product form of the evaluation system may be alternatively a computer, for example, a desktop computer or a notebook computer.

In another embodiment of the present invention, an application program is further provided, where the program is installed on an intelligent terminal or a computer system, and when the application program is executed, a processor of the intelligent terminal or the computer system is enabled to perform the following steps:

obtaining a patent factor of a subject patent, where the patent factor includes at least forward reference information of the patent, backward reference information of the patent, a legal status of the patent, and application and authorization information of patent family members;

obtaining commercial data of a company holding the patent, where the commercial data includes at least total asset information of the company and debt ratio information of the company;

obtaining technical market information of a technology related to the patent in an application country, where the technical market information includes at least technical breadth information of the patent, and the technical breadth information reflects at least alternative-technology information of the technology related to the subject patent; and

estimating monetary value of the patent by using a preset calculation model based on the patent factor, the commercial data, and the technical market information, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, and the technical market information, and input variables of the calculation function include a product of the patent factor and the corresponding variable coefficient, a product of the commercial data and the corresponding variable coefficient, and a product of the technical market information and the corresponding variable coefficient.

Optionally, when the application program is executed, the processor of the intelligent terminal or the computer system is further enabled to perform the following step:

obtaining macroeconomic information of the application country of the patent, where the macroeconomic information includes at least a macroeconomic status and technical popularity information of the application country; and

the estimating monetary value of the patent by using a preset calculation model based on the patent factor, the commercial data, and the technical market information includes:

estimating the monetary value of the patent by using a preset calculation model based on the patent factor, the commercial data, the technical market information, and the macroeconomic information of the application country, where the calculation model is obtained by performing, based on a preset algorithm, data training on patent factors of a preset quantity of preselected patents and commercial data of a company holding the preset quantity of preselected patents, the calculation model includes a calculation function and variable coefficients corresponding to the patent factor, the commercial data, the technical market information, and the macroeconomic information, and input variables of the calculation function include a product of the patent factor and the corresponding variable coefficient, a product of the commercial data and the corresponding variable coefficient, a product of the technical market information and the corresponding variable coefficient, and a product of the macroeconomic information and the corresponding variable coefficient.

Optionally, when the application program is executed, the processor of the intelligent terminal or the computer system is further enabled to perform the following step:
estimating the monetary value of the patent by using the following calculation model:

$$TV = e^{\wedge}\{\ln(a \times Size_{i,t}) + b \times FCit_{i,t} + c \times FNCit_{i,t} + d \times Claim_{i,t} + f \times BCit_{i,t}$$

$$+ g \times USApp_{i,t} + h \times WApp_{i,t} + j \times EUApp_{i,t} + \ln(k \times Glags_{i,t}) + l \times SD_{i,t} + m \times FS_{i,t} + n$$

$$\times BFCit_{i,t} + o \times LnPat_{i,t} + p \times NRI_t + q \times IC_t + t \times SR_{i,t}\},$$

where TV is a monetary valuation of the patent; $FCit_{i,t}$ is a quantity of patent documents that reference the subject patent in the forward reference information of the patent; $FNCit_{i,t}$ is the quantity of patent documents that reference the subject patent in the forward reference information of the patent; $Claim_{i,t}$ is a quantity of claims of the subject patent; $BCit_{i,t}$ is a quantity of reference documents referenced by the subject patent; $USApp_{i,t}$ is a quantity of patents whose applications are submitted to the United States Patent and Trademark Office in the patent family members; $WApp_{i,t}$ is a quantity of patents whose applications are submitted to a world intellectual property organization in the patent family members; $EUApp_{i,t}$ is a quantity of patents whose applications are submitted to the European Patent Office in the patent family members; $\ln(k \times Glags_{i,t})$ is a logarithm that is of a difference between an application time and an authorization time of the subject patent and that has a variable coefficient k; $SD_{i,t}$ is a technical breadth of the subject patent; $FS_{i,t}$ is a quantity of patent family members of the subject patent; $BFCit_{i,t}$ is a quantity of reference documents referenced by the patent family members of the patent; $LnPat_{i,t}$ is a logarithm of a total quantity of patents of the company holding the subject patent; $NRI_t$ is technical expansibility of the application country of the patent and maturity for deploying the patent technology in the application country; $IC_t$ is an infrastructure change degree of the application country of the subject patent; $\ln(a \times Size_{i,t})$ is a logarithm that is of total assets of the company holding the subject patent and that has a variable coefficient a; and $SR_{i,t}$ is a debt ratio of the company holding the subject patent; and
a, b, c, d, f, g, h, j, k, 1, m, n, o, p, q, r, and t are variable coefficients that respectively correspond to specific factors in the patent factor, the commercial data, the technical market information, and the macroeconomic information, the variable coefficients are real numbers, and the variable coefficients are real numbers in a range of [-1, +1].

As shown in FIG. 5, an embodiment of the present invention provides a patent monetary value evaluation system. The system includes: a processor 410 and a memory 420. Optionally, the processor 410 and the memory 420 are connected through a bus 710. The memory is configured to store one or more instructions, and the instruction is configured to be executed by the processor. When the instruction is executed, the processor performs the following steps:

obtaining a patent factor, commercial data of a company holding a patent, and technical market information of a technology related to the patent in an application country, where the patent factor, the commercial data, and the technical market information are used for evaluating monetary value of the subject patent; the patent factor includes at least forward reference information of the patent, backward reference information of the patent, a legal status of the patent, and application and authorization information of patent family members; the commercial data includes at least total asset information of the company and debt ratio information of the company; and the technical market information includes at least alternative-technology information of the technology related to the patent;
selecting any one of the patent factor, the commercial data, and the technical market information that are obtained as a first evaluation element;
performing a first value evaluation on the subject patent based on the first evaluation element and a corresponding variable coefficient;
on a basis of the first value evaluation, performing a second value evaluation on the subj ect patent based on a second evaluation element and a corresponding variable coefficient, where the second evaluation element is any one of the patent factor, the commercial data, and the technical market information except the first evaluation element;
on a basis of the second value evaluation, performing a third value evaluation on the subject patent based on a third evaluation element and a corresponding variable coefficient, where the third evaluation element is a remaining one of the patent factor, the commercial data, and the technical market information except the first evaluation element and the second evaluation element; and
on a basis of the third value evaluation, performing, on the subject patent based on a review comment on the subject patent of a reviewing process, a fourth value evaluation that is based on patent office recognition, to obtain the monetary value of the patent that is based on a result of the fourth value evaluation.

Optionally, the variable coefficients are obtained by performing, based on a preset algorithm, data training on patent factors of a preset quantity of preselected patents and commercial data of a company holding the preset quantity of preselected patents; and the variable coefficients are real numbers in a range of [-1, +1].

Optionally, a product form of the evaluation system may be an intelligent terminal, for example, a smartphone or a tablet computer.

Optionally, a product form of the evaluation system may be alternatively a computer, for example, a desktop computer or a notebook computer.

An embodiment of the present invention further provides an application program. The program may be installed on an intelligent terminal or a computer system. The program may be alternatively placed on a remote server on a network. The program may be alternatively placed in an application store, for example, the APP Store. When the application program is installed and then executed, a processor of the intelligent terminal or the computer system on which the application program is installed is enabled to perform the steps in any one of the embodiments corresponding to FIG. 1 to FIG. 3.

Optionally, an embodiment of the present invention further provides a computer-readable storage medium. The application program in the foregoing embodiments is stored in the computer-readable storage medium.

The embodiments of the present invention describe a patent monetary value evaluation manner, and interdependence between patent value and market factors, enterprise factors, and technical factors is determined based on analysis and understanding of historical data and market dynamics. The model is simple and easy for use and can evaluate a patent and/or a company possessing the patent to obtain monetary value, thereby effectively resolving a pricing basis problem during fund raising and trading of an innovative technology. Therefore, the model is of great significance in promoting patent technology investment, transfer and commercialization.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely example embodiments of the present invention, but are not intended to limit the present invention. Any modification, equivalent replacement, and improvement made without departing from the spirit and principle of the present invention shall fall within the protection scope of the present invention.

**Claims**

1. A patent monetary value evaluation method, wherein the method comprises:

   obtaining a patent factor of a subject patent, wherein the patent factor comprises at least forward reference information of the patent, backward reference information of the patent, a legal status of the patent, and application and authorization information of patent family members;
   obtaining commercial data of a company holding the patent, wherein the commercial data comprises at least total asset information of the company and debt ratio information of the company;
   obtaining technical market information of a technology related to the patent in an application country, wherein the technical market information comprises at least technical breadth information of the patent, and the technical breadth information reflects at least alternative-technology information of the technology related to the subject patent; and
   estimating monetary value of the patent by using a preset calculation model based on the patent factor, the commercial data, and the technical market information, wherein the calculation model is obtained by performing, based on a preset algorithm, data training on patent factors of a preset quantity of preselected patents and commercial data of a company holding the preset quantity of preselected patents, the calculation model comprises a calculation function and variable coefficients corresponding to the patent factor, the commercial data, and the technical market information, and input variables of the calculation function comprise a product of the patent factor and the corresponding variable coefficient, a product of the commercial data and the corresponding variable coefficient, and a product of the technical market information and the corresponding variable coefficient.

2. The evaluation method according to claim 1, wherein the patent factor further comprises:
   a logarithm of a difference between an application time and an authorization time of the subject patent, a quantity of claims of the patent, a quantity of patent family members of the patent, backward reference information of the patent family members of the patent, and a logarithm of a total quantity of patents of the company holding the patent.

3. The evaluation method according to claim 2, wherein the application and authorization information of the patent family members comprises:

a quantity of patents whose applications are submitted to the United States Patent and Trademark Office in the patent family members, a quantity of patents whose applications are submitted to the European Patent Office in the patent family members, and a quantity of patents whose applications are submitted to a world intellectual property organization in the patent family members.

4. The evaluation method according to claim 1, wherein a technical breadth of the patent is measured by using a quantity of IPC classification numbers of the patent or a quantity of USPC classification numbers of the patent.

5. The evaluation method according to claim 1 or 2, wherein the forward reference information of the patent comprises a quantity of patent documents that reference the subject patent and a quantity of non-patent documents that reference the subject patent; the backward reference information of the patent comprises a quantity of reference documents referenced by the subject patent; and the backward reference information of the patent family members of the patent comprises a quantity of reference documents referenced by the patent family members of the subject patent.

6. The evaluation method according to any one of claims 1 to 5, wherein the technical market information further comprises technical expansibility of the application country of the patent and maturity for deploying the patent technology in the application country.

7. The method according to any one of claims 1 to 6, wherein the method further comprises:

obtaining macroeconomic information of the application country of the patent, wherein the macroeconomic information comprises at least a macroeconomic status and technical popularity information of the application country; and
the estimating monetary value of the patent by using a preset calculation model based on the patent factor, the commercial data, and the technical market information comprises:
estimating the monetary value of the patent by using a preset calculation model based on the patent factor, the commercial data, the technical market information, and the macroeconomic information of the application country, wherein the calculation model is obtained by performing, based on a preset algorithm, data training on patent factors of a preset quantity of preselected patents and commercial data of a company holding the preset quantity of preselected patents, the calculation model comprises a calculation function and variable coefficients corresponding to the patent factor, the commercial data, the technical market information, and the macroeconomic information, and input variables of the calculation function comprise a product of the patent factor and the corresponding variable coefficient, a product of the commercial data and the corresponding variable coefficient, a product of the technical market information and the corresponding variable coefficient, and a product of the macroeconomic information and the corresponding variable coefficient.

8. The evaluation method according to any one of claims 1 to 7, wherein the macroeconomic information is measured in a form of a basic technology change degree of the application country.

9. The evaluation method according to any one of claims 2 to 8, wherein the estimating the monetary value of the patent by using a preset calculation model based on the patent factor, the commercial data, the technical market information, and the macroeconomic information comprises:
estimating the monetary value of the patent by using the following calculation model:

$$TV = e \char94 \{\ln(a \times Size_{i,t}) + b \times FCit_{i,t} + c \times FNCit_{i,t} + d \times Claim_{i,t} + f \times BCit_{i,t} + g \times$$

$$USApp_{i,t} + h \times WApp_{i,t} + j \times EUApp_{i,t} + Ln(k \times Glags_{i,t}) + l \times SD_{i,t} + m \times FS_{i,t} + n \times$$

$$BFCit_{i,t} + o \times LnPat_{i,t} + p \times NRI_t + q \times IC_t + t \times SR_{i,t}\},$$

wherein TV is a monetary valuation of the patent; $FCit_{i,t}$ is the quantity of patent documents that reference the subject patent in the forward reference information of the patent; $FNCit_{i,t}$ is the quantity of non-patent documents that reference the subject patent in the forward reference information of the patent; $Claim_{i,t}$ is the quantity of claims of the subject patent; $BCit_{i,t}$ is the quantity of reference documents referenced by the subject patent; $USApp_{i,t}$ is the quantity of patents whose applications are submitted to the United States Patent and Trademark Office in the patent family members; $WApp_{i,t}$ is the quantity of patents whose applications are submitted to a world intellectual property organization in the patent family members; $EUApp_{i,t}$ is the quantity of patents whose applications are submitted to the European Patent Office in the patent family members; $Ln(k \times Glags_{i,t})$ is a logarithm that is of the difference between the application time and the authorization time of the subject patent and that has a variable coefficient k; $SD_{i,t}$ is the technical breadth of the subject patent; $FS_{i,t}$ is the quantity of patent family members of the subject patent; $BFCit_{i,t}$ is the quantity of reference documents referenced by the patent family members of the patent; $LnPat_{i,t}$ is the logarithm of the total quantity of patents of the company holding the subject patent; $NRI_t$ is the technical expansibility of the application country of the patent and the maturity for deploying the patent technology in the application country; $IC_t$ is an infrastructure change degree of the application country of the subject patent; $Ln(a \times Size_{i,t})$ is a logarithm that is of total assets of the company holding the subject patent and that has a variable coefficient a; and $SR_{i,t}$ is a debt ratio of the company holding the subject patent; and

a, b, c, d, f, g, h, j, k, 1, m, n, o, p, q, r, and t are variable coefficients that respectively correspond to specific factors in the patent factor, the commercial data, the technical market information, and the macroeconomic information, and the variable coefficients are real numbers.

10. The evaluation method according to any one of claims 1 to 9, wherein the variable coefficients are real numbers in a range of [-1, +1].

11. A patent monetary value evaluation method, wherein the method comprises:

obtaining a patent factor, commercial data of a company holding a patent, and technical market information of a technology related to the patent in an application country, wherein the patent factor, the commercial data, and the technical market information are used for evaluating monetary value of the subject patent; the patent factor comprises at least forward reference information of the patent, backward reference information of the patent, a legal status of the patent, and application and authorization information of patent family members; the commercial data comprises at least total asset information of the company and debt ratio information of the company; and the technical market information comprises at least alternative-technology information of the technology related to the patent;

selecting any one of the patent factor, the commercial data, and the technical market information that are obtained as a first evaluation element;

performing a first value evaluation on the subject patent based on the first evaluation element and a corresponding variable coefficient;

on a basis of the first value evaluation, performing a second value evaluation on the subject patent based on a second evaluation element and a corresponding variable coefficient, wherein the second evaluation element is any one of the patent factor, the commercial data, and the technical market information except the first evaluation element;

on a basis of the second value evaluation, performing a third value evaluation on the subject patent based on a third evaluation element and a corresponding variable coefficient, wherein the third evaluation element is a remaining one of the patent factor, the commercial data, and the technical market information except the first evaluation element and the second evaluation element; and

on a basis of the third value evaluation, performing, on the subject patent based on a review comment on the subject patent of a reviewing process, a fourth value evaluation that is based on patent office recognition, to obtain the monetary value of the patent that is based on a result of the fourth value evaluation.

12. The evaluation method according to claim 11, wherein

the variable coefficients are obtained by performing, based on a preset algorithm, data training on patent factors of a preset quantity of preselected patents and commercial data of a company holding the preset quantity of preselected patents; and the variable coefficients are real numbers in a range of [-1, +1].

13. A patent monetary value evaluation system, wherein the system comprises: a processor, a memory, and a display, the memory is configured to store one or more instructions, and the instruction is configured to be executed by the processor; when the instruction is executed, the processor performs the following steps:

obtaining a patent factor of a subject patent, wherein the patent factor comprises at least forward reference information of the patent, backward reference information of the patent, a legal status of the patent, and application and authorization information of patent family members;

obtaining commercial data of a company holding the patent, wherein the commercial data comprises at least total asset information of the company and debt ratio information of the company;

obtaining technical market information of a technology related to the patent in an application country, wherein the technical market information comprises at least technical breadth information of the patent, and the technical breadth information reflects at least alternative-technology information of the technology related to the subject patent; and

estimating monetary value of the patent by using a preset calculation model based on the patent factor, the commercial data, and the technical market information, wherein the calculation model is obtained by performing, based on a preset algorithm, data training on patent factors of a preset quantity of preselected patents and commercial data of a company holding the preset quantity of preselected patents, the calculation model comprises a calculation function and variable coefficients corresponding to the patent factor, the commercial data, and the technical market information, and input variables of the calculation function comprise a product of the patent factor and the corresponding variable coefficient, a product of the commercial data and the corresponding variable coefficient, and a product of the technical market information and the corresponding variable coefficient; and

the display is configured to display the monetary value of the subject patent that is obtained by the processor by executing the instruction.

14. The evaluation system according to claim 13, wherein when the instruction is executed, the processor further performs the following step:

obtaining macroeconomic information of the application country of the patent, wherein the macroeconomic information comprises at least a macroeconomic status and technical popularity information of the application country; and

the estimating monetary value of the patent by using a preset calculation model based on the patent factor, the commercial data, and the technical market information comprises:

estimating the monetary value of the patent by using a preset calculation model based on the patent factor, the commercial data, the technical market information, and the macroeconomic information of the application country, wherein the calculation model is obtained by performing, based on a preset algorithm, data training on patent factors of a preset quantity of preselected patents and commercial data of a company holding the preset quantity of preselected patents, the calculation model comprises a calculation function and variable coefficients corresponding to the patent factor, the commercial data, the technical market information, and the macroeconomic information, and input variables of the calculation function comprise a product of the patent factor and the corresponding variable coefficient, a product of the commercial data and the corresponding variable coefficient, a product of the technical market information and the corresponding variable coefficient, and a product of the macroeconomic information and the corresponding variable coefficient.

15. The evaluation system according to claim 13, wherein when the instruction is executed, the processor further performs the following step:
estimating the monetary value of the patent by using the following calculation model:

$$TV = e^{\wedge} \{ \ln(a \times Size_{i,t}) + b \times FCit_{i,t} + c \times FNCit_{i,t} + d \times Claim_{i,t} + f \times BCit_{i,t} + g \times USApp_{i,t} + h \times WApp_{i,t} + j \times EUApp_{i,t} + \ln(k \times Glags_{i,t}) + l \times SD_{i,t} + m \times FS_{i,t} + n \times BFCit_{i,t} + o \times LnPat_{i,t} + p \times NRI_t + q \times IC_t + t \times SR_{i,t} \},$$

wherein TV is a monetary valuation of the patent; $FCit_{i,t}$ is a quantity of patent documents that reference the subject patent in the forward reference information of the patent; $FNCit_{i,t}$ is the quantity of patent documents that reference the subject patent in the forward reference information of the patent; $Claim_{i,t}$ is a quantity of claims of the subject patent; $BCit_{i,t}$ is a quantity of reference documents referenced by the subject patent; $USApp_{i,t}$ is a quantity of patents whose applications are submitted to the United States Patent and Trademark Office in the patent family members; $WApp_{i,t}$ is a quantity of patents whose applications are submitted to a world intellectual property organization in the patent family members; $EUApp_{i,t}$ is a quantity of patents whose applications are submitted to the European Patent Office in the patent family members; $\ln(k \times Glags_{i,t})$ is a logarithm that is of a difference between an application time and an authorization time of the subject patent and that has a variable coefficient k; $SD_{i,t}$ is a technical breadth of the subject patent; $FS_{i,t}$ is a quantity of patent family members of the subject patent; $BFCit_{i,t}$ is a quantity of reference documents referenced by the patent family members of the patent; $LnPat_{i,t}$ is a logarithm of a total quantity of patents of the company holding the subject patent; $NRI_t$ is technical expansibility of the application country of the patent and maturity for deploying the patent technology in the application country; $IC_t$ is an infrastructure change degree of the application country of the subject patent; Ln(a x $Size_{i,t}$) is a logarithm that is of total assets of the company holding the subject patent and that has a variable coefficient a; and $SR_{i,t}$ is a debt ratio of the company holding the subject patent; and

a, b, c, d, f, g, h, j, k, 1, m, n, o, p, q, r, and t are variable coefficients that respectively correspond to specific factors in the patent factor, the commercial data, the technical market information, and the macroeconomic information, the variable coefficients are real numbers, and the variable coefficients are real numbers in a range of [-1, +1].

16. An application program, wherein the program is installed on an intelligent terminal or a computer system, and when the application program is executed, a processor of the intelligent terminal or the computer system is enabled to perform the following steps:

obtaining a patent factor of a subject patent, wherein the patent factor comprises at least forward reference information of the patent, backward reference information of the patent, a legal status of the patent, and application and authorization information of patent family members;

obtaining commercial data of a company holding the patent, wherein the commercial data comprises at least total asset information of the company and debt ratio information of the company;

obtaining technical market information of a technology related to the patent in an application country, wherein the technical market information comprises at least technical breadth information of the patent, and the technical breadth information reflects at least alternative-technology information of the technology related to the subject patent; and

estimating monetary value of the patent by using a preset calculation model based on the patent factor, the commercial data, and the technical market information, wherein the calculation model is obtained by performing, based on a preset algorithm, data training on patent factors of a preset quantity of preselected patents and commercial data of a company holding the preset quantity of preselected patents, the calculation model comprises a calculation function and variable coefficients corresponding to the patent factor, the commercial data, and the technical market information, and input variables of the calculation function comprise a product of the patent factor and the corresponding variable coefficient, a product of the commercial data and the corresponding variable coefficient, and a product of the technical market information and the corresponding variable coefficient.

17. The application program according to claim 16, wherein when the application program is executed, the processor of the intelligent terminal or the computer system is further enabled to perform the following step:

obtaining macroeconomic information of the application country of the patent, wherein the macroeconomic information comprises at least a macroeconomic status and technical popularity information of the application country; and

the estimating monetary value of the patent by using a preset calculation model based on the patent factor, the commercial data, and the technical market information comprises:

estimating the monetary value of the patent by using a preset calculation model based on the patent factor, the commercial data, the technical market information, and the macroeconomic information of the application country, wherein the calculation model is obtained by performing, based on a preset algorithm, data training on patent factors of a preset quantity of preselected patents and commercial data of a company holding the preset quantity of preselected patents, the calculation model comprises a calculation function and variable coefficients corresponding to the patent factor, the commercial data, the technical market information, and the macroeconomic information, and input variables of the calculation function comprise a product of the patent factor and the corresponding variable coefficient, a product of the commercial data and the corresponding variable coefficient, a product of the technical market information and the corresponding variable coefficient, and a product of the macroeconomic information and the corresponding variable coefficient.

18. The application program according to claim 17, wherein when the application program is executed, the processor of the intelligent terminal or the computer system is further enabled to perform the following step:
estimating the monetary value of the patent by using the following calculation model:

$$TV = e \char94 \{\ln(a \times Size_{i,t}) + b \times FCit_{i,t} + c \times FNCit_{i,t} + d \times Claim_{i,t} + f \times BCit_{i,t} + g \times$$

$$USApp_{i,t} + h \times WApp_{i,t} + j \times EUApp_{i,t} + Ln(k \times Glags_{i,t}) + 1 \times SD_{i,t} + m \times FS_{i,t} + n \times$$

$$BFCit_{i,t} + o \times LnPat_{i,t} + p \times NRI_t + q \times IC_t + t \times SR_{i,t}\},$$

wherein TV is a monetary valuation of the patent; $FCit_{i,t}$ is a quantity of patent documents that reference the subject patent in the forward reference information of the patent; $FNCit_{i,t}$ is the quantity of patent documents that reference the subject patent in the forward reference information of the patent; $Claim_{i,t}$ is a quantity of claims of the subject patent; $BCit_{i,t}$ is a quantity of reference documents referenced by the subject patent; $USApp_{i,t}$ is a quantity of patents whose applications are submitted to the United States Patent and Trademark Office in the patent family members; $WApp_{i,t}$ is a quantity of patents whose applications are submitted to a world intellectual property organization in the patent family members; $EUApp_{i,t}$ is a quantity of patents whose applications are submitted to the European Patent Office in the patent family members; $Ln(k \times Glags_{i,t})$ is a logarithm that is of a difference between an application time and an authorization time of the subject patent and that has a variable coefficient k; $SD_{i,t}$ is a technical breadth of the subject patent;

$FS_{i,t}$ is a quantity of patent family members of the subject patent; $BFCit_{i,t}$ is a quantity of reference documents referenced by the patent family members of the patent; $LnPat_{i,t}$ is a logarithm of a total quantity of patents of the company holding the subject patent; $NRI_t$ is technical expansibility of the application country of the patent expanded and maturity for deploying the patent technology in the application country; $IC_t$ is an infrastructure change degree of the application country of the subject patent; $Ln(a \times Size_{i,t})$ is a logarithm that is of total assets of the company holding the subject patent and that has a variable coefficient a; and $SR_{i,t}$ is a debt ratio of the company holding the subject patent; and

a, b, c, d, f, g, h, j, k, 1, m, n, o, p, q, r, and t are variable coefficients that respectively correspond to specific factors in the patent factor, the commercial data, the technical market information, and the macroeconomic information, the variable coefficients are real numbers, and the variable coefficients are real numbers in a range of [-1, +1].

19. A computer-readable storage medium, wherein the application program according to any one of claims 16 to 18 is stored in the computer-readable storage medium.

20. A patent monetary value evaluation system, wherein the system comprises: a processor, a memory, and a display, the memory is configured to store one or more instructions, and the instruction is configured to be executed by the processor; and when the instruction is executed, the processor performs the following steps:

obtaining a patent factor, commercial data of a company holding a patent, and technical market information of a technology related to the patent in an application country, wherein the patent factor, the commercial data, and the technical market information are used for evaluating a monetary value of the subject patent; the patent factor comprises at least forward reference information of the patent, backward reference information of the patent, a legal status of the patent, and application and authorization information of patent family members; the commercial data comprises at least total asset information of the company and debt ratio information of the company; and the technical market information comprises at least alternative-technology information of the technology related to the patent;

selecting any one of the patent factor, the commercial data, and the technical market information that are obtained as a first evaluation element;

performing a first value evaluation on the subject patent based on the first evaluation element and a corresponding variable coefficient;

on a basis of the first value evaluation, performing a second value evaluation on the subject patent based on a second evaluation element and a corresponding variable coefficient, wherein the second evaluation element is any one of the patent factor, the commercial data, and the technical market information except the first evaluation element;

on a basis of the second value evaluation, performing a third value evaluation on the subject patent based on a third evaluation element and a corresponding variable coefficient, wherein the third evaluation element is a remaining one of the patent factor, the commercial data, and the technical market information except the first evaluation element and the second evaluation element; and

on a basis of the third value evaluation, performing, on the subject patent based on a review comment on the subject patent of a reviewing process, a fourth value evaluation that is based on patent office recognition, to obtain the monetary value of the patent that is based on a result of the fourth value evaluation.

21. The evaluation system according to claim 21, wherein the variable coefficients are obtained by performing, based on a preset algorithm, data training on patent factors of a preset quantity of preselected patents and commercial data of a company holding the preset quantity of preselected patents; and the variable coefficients are real numbers in a range of [-1, +1].

22. An application program, wherein the program is installed on an intelligent terminal or a computer system, and when the application program is executed, a processor of the intelligent terminal or the computer system is enabled to perform the steps according to any one of claims 1 to 10.

23. A computer-readable storage medium, wherein the application program according to claim 22 is stored in the computer-readable storage medium.

```
┌─────────────────┐         ┌─────────────────┐         ┌──────────────────────┐
│ Obtain a patent │  S110   │ Obtain commercial│  S120   │  Obtain technical    │  S130
│   factor of a   │         │ data of a company│         │ market information   │
│ subject patent  │         │  holding the     │         │ of a technology      │
│                 │         │  subject patent  │         │ related to the       │
│                 │         │                  │         │ subject patent in an │
│                 │         │                  │         │ application country  │
└─────────────────┘         └─────────────────┘         └──────────────────────┘
```

```
┌───────────────────────────────────────────────────────────┐
│ Estimate monetary value of the patent by using a preset    │   S140
│ calculation model based on the patent factor, the          │
│ commercial data, and the technical market information      │
└───────────────────────────────────────────────────────────┘
```

```
┌ ─ ─ ─ ─ ─ ─ ─ ─ ─ ─ ─ ─ ─ ─ ─ ─ ─ ─ ─ ─ ─ ─ ─ ─ ─ ─ ─ ┐
│ Obtain macroeconomic information of the application      │   S131
│                 country of the patent                    │
└ ─ ─ ─ ─ ─ ─ ─ ─ ─ ─ ─ ─ ─ ─ ─ ─ ─ ─ ─ ─ ─ ─ ─ ─ ─ ─ ─ ┘
```

FIG. 1

Obtain evaluation factors — S210

Select a first evaluation element — S220

Perform a first value evaluation on a subject patent based on the first evaluation element and a corresponding variable coefficient — S230

On a basis of the first value evaluation, perform a second value evaluation on the subject patent based on a second evaluation element and a corresponding variable coefficient — S240

On a basis of the second value evaluation, perform a third value evaluation on the subject patent based on a third evaluation element and a corresponding variable coefficient — S250

On a basis of the third value evaluation, perform, on the subject patent based on a review comment on the subject patent of a reviewing process, a fourth value evaluation that is based on patent office recognition, to obtain monetary value of the patent that is based on a result of the fourth value evaluation — S260

FIG. 2

Obtain evaluation factors required for valuation — S310

↓

Evaluate the evaluation factors — S320

↓

Obtain monetary value that is of a subject patent and that is contributed by a company commercial factor — S330

↓

Obtain monetary value that is of the subject patent and that is contributed by a patent width — S340

↓

Obtain monetary value that is of the subject patent and that is contributed by novelty — S350

↓

Obtain monetary value that is of the subject patent and that is contributed by recognition of an authority — S360

↓

Obtain monetary value that is of the subject patent and that is contributed by society, commerce, and technologies — S370

↓

Obtain final monetary value of the patent — S380

↓

Adjust the monetary value of the patent based on variable coefficients of the evaluation factors — S390

Perform evaluation based on company commercial data

Perform evaluation based on a quantity of claims of the subject patent

Perform evaluation based on forward and backward reference data of the patent

Perform evaluation based on a review comment

Perform evaluation based on technical market information

Adjust the variable coefficients — S390

Change in a proportion of an input evaluation factor causes a change in a monetary valuation of the patent

FIG. 3

330

Display

310

Processor

710

Memory

320

FIG. 4

410

Processor

710

Memory

420

FIG. 5

## INTERNATIONAL SEARCH REPORT

| International application No. |
|---|
| **PCT/CN2018/092111** |

### A. CLASSIFICATION OF SUBJECT MATTER

G06Q 50/18(2012.01)i

According to International Patent Classification (IPC) or to both national classification and IPC

### B. FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNABS; CNTXT; TWTXT; TWABS; DWPI; VEN; USTXT; EPTXT; WOTXT; CNKI: 专利, 货币, 价值, 评估, 商业, 市场, 法律, 经济, 因素, 训练, patent, coin, currency, value, asset, estimate, evaluate, business, commerce, market, law, economic, factor, training

### C. DOCUMENTS CONSIDERED TO BE RELEVANT

| Category* | Citation of document, with indication, where appropriate, of the relevant passages | Relevant to claim No. |
|---|---|---|
| X | CN 105205618 A (NARI GROUP CORPORATION) 30 December 2015 (2015-12-30) description, paragraphs 5-14, and figure 1 | 1-23 |
| X | CN 105184707 A (JIANGSU BAITEN TECHNOLOGY CO., LTD.) 23 December 2015 (2015-12-23) description, paragraphs 7-23 | 1-23 |
| X | CN 103455722 A (TAO, YE) 18 December 2013 (2013-12-18) description, paragraphs 5-19 | 1-23 |
| A | WO 2007078986 A2 (PATENTRATINGS LLC) 12 July 2007 (2007-07-12) entire document | 1-23 |
| A | CN 106068526 A (BOAO ZONGHENG NETWORK TECHNOLOGY CO., LTD.) 02 November 2016 (2016-11-02) entire document | 1-23 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 September 2018** | **19 September 2018** |

| Name and mailing address of the ISA/CN | Authorized officer |
|---|---|
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2018/092111**

| Patent document cited in search report | | | Publication date (day/month/year) | Patent family member(s) | | | Publication date (day/month/year) |
|---|---|---|---|---|---|---|---|
| CN | 105205618 | A | 30 December 2015 | None | | | |
| CN | 105184707 | A | 23 December 2015 | None | | | |
| CN | 103455722 | A | 18 December 2013 | None | | | |
| WO | 2007078986 | A2 | 12 July 2007 | US | 2010094781 | A1 | 15 April 2010 |
| | | | | US | 2007150298 | A1 | 28 June 2007 |
| | | | | US | 7657476 | B2 | 02 February 2010 |
| | | | | WO | 2007078986 | A3 | 10 April 2008 |
| CN | 106068526 | A | 02 November 2016 | EP | 3154002 | A4 | 31 May 2017 |
| | | | | WO | 2017031631 | A1 | 02 March 2017 |
| | | | | US | 2017053366 | A1 | 23 February 2017 |
| | | | | EP | 3154002 | A1 | 12 April 2017 |

Form PCT/ISA/210 (patent family annex) (January 2015)

**EP 3 644 268 A1**

## REFERENCES CITED IN THE DESCRIPTION

**Patent documents cited in the description**

- CN 201710476483